# EUROPÄISCHE PATENTSCHRIFT

(11) **EP 3 216 556 B1**
(45) Veröffentlichungstag und Bekanntmachung des Hinweises auf die Patenterteilung: **26.09.2018**
(21) Anmeldenummer: 17159104.3
(22) Anmeldetag: 03.03.2017
(51) Int. Cl.: B23P 19/06, F16B 37/06

(54) **VERFAHREN ZUM ANBRINGEN EINES FUNKTIONSELEMENTS AN EINEM BLECHTEIL**
METHOD FOR ATTACHING A FUNCTIONAL ELEMENT TO A SHEET
PROCÉDÉ DE FIXATION D'UN ÉLÉMENT FONCTIONNEL SUR UNE PIÈCE DE TÔLERIE

(30) Priorität: 09.03.2016 DE 102016104335
(43) Veröffentlichungstag der Anmeldung: 13.09.2017
(73) Patentinhaber: Profil Verbindungstechnik GmbH & Co. KG, 61381 Friedrichsdorf (DE)
(72) Erfinder: Becker, Christoph, 35305 Grünberg (DE); Sowa, Christian, 63165 Mühlheim/Main (DE)
(74) Vertreter: Manitz Finsterwald Patentanwälte PartmbB

(56) Entgegenhaltungen:
- WO-A1-2005/050034
- WO-A2-02/081145
- DE-A1-102014 104 571
- DE-U1- 20 113 853
- US-A1- 2007 258 788

## Beschreibung

Die vorliegende Erfindung betrifft ein Verfahren zum Anbringen eines Funktionselements an einem Blechteil, wobei das Funktionselement einen Kopfteil mit einer ringförmigen Auflagefläche und einen rohrförmigen, selbststanzend ausgebildeten Nietabschnitt aufweist, der sich auf der Seite der Auflagefläche des Kopfteils von demselben weg erstreckt, wobei die Auflagefläche im Bereich des Übergangs von dem Kopfteil in den Nietabschnitt eine Ringvertiefung mit einer zu einer Längsachse des Funktionselements schräggestellten Ringfläche umfasst, wobei die Ringvertiefung ihre größte Tiefe benachbart zu dem Nietabschnitt aufweist, und wobei gegebenenfalls Verdrehsicherungsmerkmale, wie beispielsweise Verdrehsicherungsnasen, vorgesehen sind, die sich im Bereich der Ringvertiefung und/oder im Bereich des Übergangs der Ringvertiefung in den Nietabschnitt befinden und die wahlweise die Ringvertiefung in einzelne um die Längsachse des Funktionselements verteilte Felder unterteilen, wobei das Blechteil auf einer Lochmatrize abgestützt wird, die eine Bohrung aufweist, deren Durchmesser zumindest im Wesentlichen dem Außendurchmesser des Nietabschnitts entspricht oder etwas größer als dieser ist, wobei das Funktionselement derart auf das auf der Lochmatrize abgestützte Blechteil gepresst wird, dass mittels des Nietabschnitts ein Stanzbutzen aus dem Blechteil herausgestanzt wird.

Ein derartiges Verfahren zum Anbringen eines Funktionselements an einem Blechteil sowie das Funktionselement selbst werden beispielsweise in der WO 02/081145 A2 beschrieben. Das in dieser Schrift beschriebene Verfahren ist ein klassisches Nietverfahren, welches im Wesentlichen in zwei Schritten unter Verwendung zweier unterschiedlicher Matrizen von Statten geht: in einem ersten Schritt wird zunächst unter Verwendung einer Lochmatrize mittels des Nietabschnitts ein Stanzbutzen aus einem Blechteil herausgestanzt, wodurch ein Stanzloch entsteht, das das Funktionselement und insbesondere dessen Nietabschnitt klemmend aufnimmt. In einem zweiten Schritt wird dann anschließend das freie Ende des Nietabschnitts unter Verwendung einer Nietmatrize umgelegt bzw. umgebördelt, sodass das Blechteil zwischen dem Funktionselement und dessen umgebördelten Nietabschnitt festgeklemmt ist. Da das Funktionselement gezielt umgeformt wird, handelt es sich bei demselben um ein Nietelement.

Ferner geht aus der WO 2005/050034 A1 ein gattungsgemäßes Verfahren hervor.

Grundsätzlich wird auf dem Gebiet der Verbindungselemente, die bei der Anfertigung von Blechteilen an diesen maschinell angebracht werden, zwischen Einpresselementen einerseits und Nietelementen andererseits unterschieden. Bei Nietelementen wird der Nietabschnitt des Elements bei der Anbringung am Blechteil in der beschriebenen Weise gezielt verformt, in aller Regel um am freien Ende des Nietabschnitts einen Nietbördel auszubilden, wodurch das Blechteil zwischen Nietbördel und einem Flanschteil des Nietelements festgehalten wird, um eine verdreh- und auspresssichere Verbindung zu schaffen. Einpresselemente zeichnen sich hingegen dadurch aus, dass sie bei der Anbringung an einem Blechteil zumindest nicht absichtlich oder allenfalls minimalst verformt werden; vielmehr wird das Blechteil selbst verformt und in Eingriff mit Formmerkmalen des Einpresselementes gebracht, wodurch das Einpresselement verdreh- und auspresssicher am Blechteil befestigt wird.

Sowohl Einpresselemente als auch Nietelemente kennt man ferner in der Form von selbststanzenden Elementen. Die Bezeichnung selbststanzend ist so zu verstehen, dass das entsprechende Element sein eigenes Loch in ein Blechteil stanzt, sofern eine ausreichende Kraft auf das selbststanzende Element ausgeübt wird, beispielsweise von einer Presse, von einem Roboter oder einer kraftbetätigten Zange, die das selbststanzende Element gegen das Blechteil presst, und das Blechteil auf der dem Element abgewandten Seite auf einer entsprechenden Matrize abgestützt wird.

Obwohl das in der WO 02/081145 A2 beschriebene Nietverfahren gute Dienste leistet, wäre es bei verschiedenen Anwendungen wünschenswert, wenn es möglich wäre, das dort als Nietelement fungierende Funktionselement mit nur einem einzigen Bearbeitungsschritt an einem Blechteil verdreh- und auspresssicher anbringen zu können.

Der Erfindung liegt daher die Aufgabe zu Grunde, das aus der WO 02/081145 A2 bekannte Verfahren zum Anbringen eines als Nietelement fungierenden Funktionselements an einem Blechteil so weiterzuentwickeln, dass der Bearbeitungsaufwand reduziert ist. Insbesondere soll das Verfahren zur verdreh- und auspresssicheren Anbringung eines sogenannten RND Nietelements der Firma Profil Verbindungstechnik GmbH und Co. KG an einem Blechteil dienen.

Zur Lösung dieser Aufgabe wird erfindungsgemäß ein Verfahren zum Anbringen eines Funktionselements an einem Blechteil gemäß dem Anspruch 1 vorgeschlagen.

In den abhängigen Ansprüchen sind vorteilhafte Ausführungsvarianten des Verfahrens angegeben.

An dem Nietabschnitt wird also einerseits eine Art Hinterschneidung in Form einer Rille oder Einschnürung bei der Anbringung des Funktionselementes an dem Bauteil erzeugt, die einen Anteil des plastisch umgeformten Blechmaterials aufnimmt, wodurch das Funktionselement auspresssicher an dem Blechteil gehalten ist. Um jedoch auch in der gewünschten Weise für eine Verdrehsicherung zu sorgen, wird ein Anteil des plastisch umgeformten Blechmaterials bis in die Ringvertiefung gedrängt und zwar so weit, dass die Ringvertiefung im Wesentlichen vollständig durch auf diese Weise verdrängtes Blechmaterial ausgefüllt ist, so dass insbesondere dann, wenn Verdrehsicherungsmerkmale, wie beispielsweise Verdrehsicherungsnasen, vorgesehen sind, die sich im Bereich der Ringvertiefung und/oder im Bereich des Übergangs der Ringvertiefung in den Nietabschnitt befinden und die Ringvertiefung in einzelne um die Längsachse des Funktionselements verteilte Felder unterteilen, eine unbeabsichtigte Verdrehung des Funktionselements ausgeschlossen ist.

Ein unter Verwendung des erfindungsgemäßen Verfahrens hergestelltes Zusammenbauteil bestehend aus dem selbststanzenden Nietelement und einem Blechteil zeichnet sich somit dadurch aus, dass das Blechteil ein Stanzloch mit einer Form entsprechend der Form des Nietabschnitts aufweist, und dass sich das Material des Lochrandes einerseits bis in die Ringvertiefung dieselbe im Wesentlichen vollständig ausfüllend hinein erstreckt und andererseits in eine Einschnürung bzw. eine Rille hinein erstreckt, die sich radial in dem Nietabschnitt am Außenumfang desselben ausbildet.

Die Funktion der Lochmatrize erschöpft sich somit nicht nur im Ausstanzen eines zur Aufnahme des Nietelements geeigneten Stanzloches; vielmehr ist das Blechteil nach Anfertigung des Stanzloches derart an dem Nietelement befestigt, dass das Nietelement verdreh- und auspresssicher an dem Blechteil anliegt. Besonders überraschend ist, dass das Nietelement im Ausgangszustand vor der Anbringung an dem Blechteil keine Merkmale wie eine Hinterschneidung im Nietabschnitt aufweisen muss, die die Auspresssicherheit bzw. den Auspresswiderstand sicherstellen könnten. Nichtsdestotrotz wird eine hochwertige Auspresssicherheit erreicht, da beim Ausschneiden des Stanzbutzens und/oder beim Anbringen an dem Blechteil, das im Allgemeinem den doppelten Festigkeitswert im Vergleich zu dem Nietelement aufweist, das Blechmaterial das weichere Nietelement verformt und sich in desselben hinein drückt, so dass es sich in einer ringförmigen Rille oder Einschnürung befindet, die sich unter dem Druck des Blechmaterials, der durch die Matrize erzeugt wird, am Schaft des Nietabschnitts ausbildet. Besonders überraschend ist, dass eine solche Verformung des Nietabschnitts, d.h. die Ausbildung einer Einschnürung, die sich radial in den Nietabschnitt hinein erstreckt, auch dann zu erreichen ist, wenn das Blechteil eine geringere Festigkeit als das Element aufweist.

Das erfindungsgemäße Verfahren basiert im Wesentlichen auf der Erkenntnis, dass es möglich ist, das Material des Blechteils, das das Stanzloch umgibt, nicht nur in die Ringvertiefung zu pressen sondern gleichzeitig zur Ausbildung einer Einschnürung im Nietabschnitt in denselben hineinzudrücken. Insbesondere wurde erkannt, dass dies mittels einer speziell ausgebildeten Lochmatrize möglich ist. So weist die bei dem Verfahren eingesetzte Lochmatrize an der dem Blechteil zugewandten Stirnseite eine Ringnase auf, die die Bohrung der Lochmatrize umgibt und die gegenüber einer Auflagefläche der Lochmatrize erhaben ist und insbesondere eine ebene kreisringförmige Stirnfläche definiert. Anders als die bei dem in der WO 02/081145 A2 beschriebenen Verfahren verwendete Lochmatrize weist die Lochmatrize bei dem erfindungsgemäßem Verfahren also keine Ringlippe auf, die einen umlaufenden Grat definiert, der keine radiale Erstreckung aufweist; vielmehr besitzt Ringnase der bei dem erfindungsgemäßem Verfahren verwendeten Lochmatrize eine ebene kreisringförmige Stirnfläche, die eine nicht unerhebliche Erstreckung in radialer Richtung aufweist.

So wurde nämlich erfindungsgemäß erkannt, dass das Blechmaterial, das das durch das Herausstanzen des Stanzbutzens erzeugte Stanzloch umgibt, seitlich nicht verdrängt werden kann, wenn die Lochmatrize über die ebene kreisringförmige Stirnfläche an dem Blechmaterial anliegt, wie dies andernfalls der Fall wäre, wenn die Lochmatrize gemäß dem Vorbild der WO 02/081145 A2 eine gratartige Ringlippe besäße, da sich in diesem Fall die Ringlippe mit dem Grat voraus in das Blechmaterial endrücken und dasselbe seitlich verdrängen würde. Im Gegensatz hierzu lässt sich über die ebene Stirnfläche der Ringnase der Lochmatrize, die bei dem erfindungsgemäßen Verfahren verwendet wird, eine Druckspannung in dem Blechmaterial, das das durch das Herausstanzen des Stanzbutzens erzeugte Stanzloch umgibt, aufbauen, bis das Material die Fließgrenze überschreitet und plastisch zu fließen beginnt, so dass es bei anhaltendem Druck nicht nur in die Ringvertiefung eindringt, sondern benachbart zu dieser im Nietabschnitt des Nietelements eine Einschnürung erzeugt, die durch das Blechmaterial dann belegt wird.

Da ein Anteil des Blechmaterials somit in sowohl die Ringvertiefung als auch in die Einschnürung des Nietabschnitts fließt, dringt die Lochmatrize mit der ebenen kreisringförmigen Stirnfläche der Ringnase voraus in das Blechmaterial ein und schiebt dabei das Blechmaterial gewissermaßen vor sich her, wodurch das Blechteil benachbart um das freie Ende des Nietabschnitts eine ringförmige Querschnittsschwächung erfährt. Dementsprechend sollte gemäße einer bevorzugten Ausführungsform des Verfahrens als Lochmatrize eine Lochmatrize verwendet werden, deren kreisringförmige Stirnfläche der Ringnase eine radiale Erstreckung aufweist, die etwa der Hälfte der Dicke des Blechteils entspricht und/oder die kleiner als die radiale Erstreckung der Ringvertiefung, jedoch größer als die Hälfte der radialen Erstreckung der Ringvertiefung ist. Das verdrängte Materialvolumen erstreckt sich somit maßgeblich in radialer Richtung, wodurch sichergestellt werden kann, dass es zu keinen Abschereffekten in dem Blechteil im Bereich um das Stanzloch kommt.

Um sowohl die Ringvertiefung als auch die Einschnürung des Nietabschnitts mit Blechmaterial füllen zu können, kann es sich gemäß einer weiteren Ausführungsform ferner als vorteilhaft erweisen, wenn als Lochmatrize eine Lochmatrize verwendet wird, deren Ringnase ein Volumen aufweist, das im Wesentlichen dem Volumen der Ringvertiefung des Funktionselements entspricht. Insbesondere muss das Volumen der Ringnase nicht wesentlich größer sein als das Volumen der Ringvertiefung, da das freie Ende des Nietabschnitts im Rahmen des Stanzvorgangs etwas gestaucht und folglich in radialer Richtung auseinander gepresst wird. Diese radiale Aufweitung des Nietabschnitts kompensiert somit gewissermaßen das Volumen der Einschnürung, so dass es ausreichend ist, wenn die Ringnase ein Volumen aufweist, das im Wesentlichen dem Volumen der Ringvertiefung des Funktionselements entspricht.

Nachfolgend wird die Erfindung unter Bezugnahme auf die beigefügten Zeichnungen genauer erläutert, wobei:
- Fig. 1 bis 3: eine Abfolge von Momentaufnahmen während der Durchführung des erfindungsgemäßen Verfahrens zeigen; und
- Fig. 4: ein Detail aus der Fig. 3 in vergrößerter Darstellung zeigt.

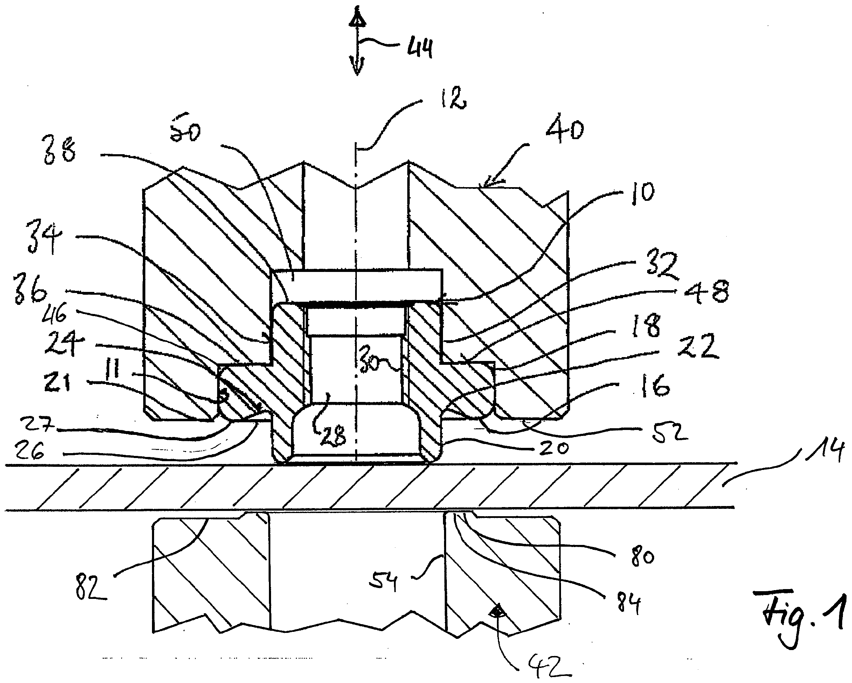

Die Fig. 1 zeigt in einem axialen Schnitt ein sogenanntes RND Nietelement 10 der Firma Profil Verbindungstechnik GmbH und Co. KG, wobei das Element 10 in einer axialen Ebene geschnitten ist, die die mittlere Längsebene 12 des Elements 10 umfasst. Das gezeigte Element 10 wird unter Anwendung des erfindungsgemäßen Verfahrens an einem Blechteil 14 befestigt.

Das Funktionselement 10, das hier als Mutterelement ausgebildet ist, weist einen Kopfteil 18 mit einer ringförmigen Auflagefläche 16 und einen rohrförmigen, auf der Seite der Auflagefläche 16 des Kopfteils 18 befindlichen Stanz- und Nietabschnitt 20 auf, der eine zylindrische äußere Mantelfläche aufweist, die im Ausgangszustand bzw. vor der Anbringung des Funktionselements 10 an dem Blechteil 14 frei von etwaigen Hinterschneidungen oder anderen Vertiefungen ist. Im Bereich des Übergangs von dem Kopfteil 18 zu dem Nietabschnitt 20 umfasst die Auflagefläche 16 eine Ringvertiefung 22 mit einer zur Längsachse 12 des Funktionselementes 10 schräggestellten Ringfläche 24, wobei die Ringvertiefung 22 ihre größte Tiefe in axialer Richtung des Nietelements 10 benachbart zu dem Nietabschnitt 20 aufweist und die schräggestellte Ringfläche 24 in einen weiteren ringförmigen Auflageflächenbereich 27 ausläuft, der in einer radialen Ebene liegt und selbst in eine Rundung 21 oder Fase des Kopfteils 18 übergeht.

In diesem Beispiel sind Verdrehsicherungsmerkmale in Form von Verdrehsicherungsnasen 26 im Bereich der Ringvertiefung 22 vorgesehen, wobei sich die Verdrehsicherungsnasen 26 in radialer Richtung erstrecken und die Ringvertiefung 22 überbrücken. In diesem Beispiel sind insgesamt sechs solcher Verdrehsicherungsnasen 26 vorgesehen, die die Ringvertiefung 22 dementsprechend in sechs aufeinander um die Längsachse 12 folgende Felder unterteilt. Es können weniger als sechs oder mehr als sechs solcher Verdrehsicherungsnasen 26 vorgesehen werden und die Nasen 26 können außerdem, falls erwünscht, auch erhaben im Bereich des Übergangs der Ringvertiefung 22 in den Nietabschnitt 20 vorgesehen werden. Dies ist aber nicht notwendig und kann auch zu Komplikationen bei der Anbringung des Elementes führen, weshalb solche Verdrehsicherungsnasen in dieser Darstellung weggelassen sind.

Um die Ringvertiefung 22 herum befindet sich daher der ringförmige Bereich der ringförmigen Auflagefläche 16, der in einer Ebene senkrecht zu der Längsachse 12 steht und vorzugsweise nicht durch Verdrehsicherungsmerkmale 26 unterbrochen ist.

Das Funktionselement 10 weist in diesem Beispiel eine mittlere Bohrung 28 auf, die mit einem Innengewinde 30 versehen ist. Der Kopfteil 18 weist außerdem eine ringförmige Ausnehmung 32 auf, die einen zylinderförmiger Bereich 34 des Kopfteils 18 definiert, der von einer ringförmigen Druckfläche 36 umgeben ist. Das Funktionselement 10 muss nicht als Mutterelement ausgebildet werden. Stattdessen könnte der zylindrische Bereich 34 über die Ringfläche 38 in einen Schaftteil übergehen, der sich in der Darstellung gemäß Fig. 1 nach oben erstrecken würde, so dass ein Bolzenelement vorliegt. Auch könnte das Funktionselement 10 andere Funktionen erfüllen. Beispielsweise könnte die Bohrung 28 als zylindrische Lagerfläche zur drehbaren Lagerung einer Welle ausgeführt werden oder als Clipaufnahme realisiert werden, um eine Clipbefestigung aufzunehmen. Wenn das Element 10 mit einem Schaftteil versehen ist, kann der Schaftteil nicht nur mit einem Gewindezylinder versehen werden, wodurch ein Bolzenelement vorliegt, sondern der Schaftteil könnte eine zylindrische Lagerfläche aufweisen, z.B. zur drehbaren Lagerung eines Hebels oder er könnte bspw. mit einer Ringnut versehen werden, um einen Clip aufzunehmen. Wesentlich ist, dass die Ringfläche 36 als Druckfläche ausgebildet ist, so dass ein Druck in Längsrichtung der Achse 12 mittels eines geeigneten Werkzeuges, hier mit 40 dargestellt, auf die Druckfläche 36 ausgeübt werden kann, um das Element 10 in das Blechteil 14 hineinzubringen, ohne dass die auf das Funktionselement 10 ausgeübten Kräfte zu einer unzulässigen Verformung des Funktionselements 10 führen. Außerdem geht aus der Fig. 1 hervor, dass der rohrförmige Nietabschnitt 20 einen Innendurchmesser aufweist, der deutlich größer ist als der der Bohrung 28 bzw. als der des Außendurchmessers des Gewindes 30 und dass das freie Stirnende des rohrförmigen Nietabschnittes 20, d.h. das untere Ende in Fig. 1, mit Stanz- und Nietmerkmalen ausgestattet ist, die später näher erläutert werden.

Unterhalb des Blechteils 14 befindet sich in der Fig. 1 eine Lochmatrize 42, wobei das Werkzeug 40 und die Lochmatrize 42 normalerweise einander gegenüber liegen und miteinander ausgerichtet in einer Station eines Folgeverbundwerkzeuges vorgesehen sind. Das heißt, dass die Längsachse 12 des Elementes 10 zugleich die Längsachse des Werkzeuges 40 und die Längsachse der Lochmatrize 42 darstellt und in an sich bekannter Weise wird die Lochmatrize 42 in einer unteren Platte des Folgeverbundwerkzeuges untergebracht und das obere Werkzeug 40 wird entsprechend dem Doppelpfeil 44 bewegt, um bei jeder nach oben gerichteten Bewegung ein weiteres Funktionselement 10 in die dargestellte Position aufzunehmen und bei jeder nach unten gerichteten Bewegung für die Einbringung des Funktionselementes in das Blechteil 14 in der nachfolgend zu erläuternden Weise zu sorgen. Im Übrigen könnte das Werkzeug 40 und die Lochmatrize 42 in einer Transferpresse angeordnet werden. Die Lochmatrize 42 wäre dann im unteren Werkzeug der Presse anzuordnen und das Werkzeug 40 wird in einem Setzkopf untergebracht, der an einer Zwischenplatte der Presse oder am oberen Werkzeug der Presse montiert ist. Stattdessen könnte die Lochmatrize 42 auf der Zwischenplatte der Presse montiert werden und das Werkzeug 40 am oberen Werkzeug der Presse befestigt werden. Auch sind umgekehrte Anordnungen durchaus denkbar, bei denen das untere Werkzeug 40 unterhalb der Lochmatrize 42 angeordnet ist, beispielsweise im unteren Werkzeug der Presse oder an der Zwischenplatte der Presse, während die Lochmatrize dann an der Zwischenplatte der Presse bzw. am oberen Werkzeug der Presse anzuordnen wäre.

Aus der Fig. 1 geht ferner hervor, dass das Funktionselement 10 in einer Ringvertiefung 46 des Werkzeugs 40 untergebracht ist, die im Bodenbereich eine ringförmige Schulter 48 aufweist, die gegen die Druckfläche 36 des Funktionselementes 10 drückt. Der zylinderförmige Bereich des Kopfteils 18 ist in einer weiteren zylindrischen Vertiefung 50 des Werkzeuges 40 untergebracht und geht über die Ringschulter 48 in die zylindrische Vertiefung 46 über. Der rohrförmige Nietabschnitt 20 des Funktionselementes 10 steht mit seinem freien Ende über die untere ringförmige Stirnseite 52 des Werkzeuges vor, wohingegen die ringförmigen Auflagefläche 16 des Funktionselementes 10 in derselben Radialebene wie die untere ringförmige Stirnseite 52 des Werkzeuges 40 liegt.

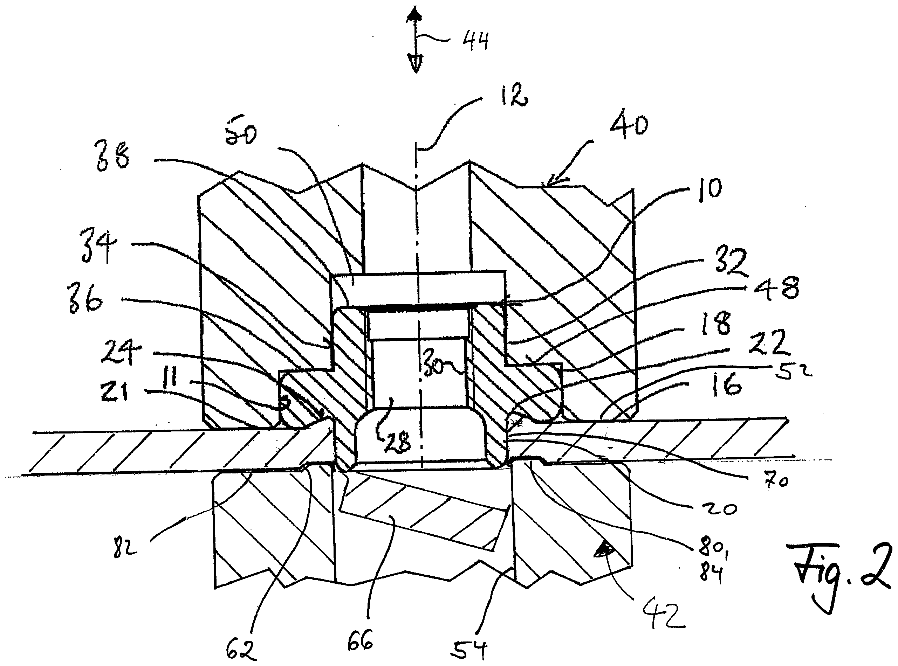

Die Lochmatrize 42 weist eine mittlere Bohrung 54 auf, die in der Richtung nach unten in Fig. 1 in eine größere Bohrung übergehen oder nach unten divergieren kann, um zu begünstigen, dass ein Stanzbutzen 66, der mittels des Zusammenwirkens von Lochmatrize 42 und Nietabschnitt 20 entsteht, aus der Bohrung 54 der Lochmatrize 42 herausfallen kann, siehe Fig. 2. Die Bohrung 54 ist geringfügig größer ausgeführt als der Nietabschnitt 20, damit dieser mit geringem Spiel in die Bohrung 54 hineinpasst. Beispielsweise könnte die Bohrung 54 im Vergleich zu dem Nietabschnitt 20 etwa 0,01 mm im Durchmesser größer sein.

Die Bohrung 54 ist an der dem Blechteil 14 zugewandten Seite der Lochmatrize 42 von einer Ringnase 80 umgeben ist, die gegenüber einer Auflagefläche 82 der Lochmatrize 42 erhaben ist und eine ebene kreisringförmige Stirnfläche 84 definiert. Die Ringnase 80 weist den gleichen Innendurchmesser wie die Bohrung 54 auf. Wie der Fig. 1 entnommen werden kann, weist die kreisringförmige Stirnfläche 84 der Ringnase 80 eine radiale Erstreckung auf, die etwa der Hälfte der Dicke des Blechteils 14 entspricht. Vorzugsweise weist die kreisringförmige Stirnfläche 84 der Ringnase 80 eine radiale Erstreckung auf, die kleiner als die radiale Erstreckung der Ringvertiefung 22, jedoch größer als die Hälfte der radialen Erstreckung der Ringvertiefung 22 ist. Außerdem kann der Fig. 1 entnommen werden, dass die Ringnase 80 ein Volumen aufweist, das im Wesentlichen dem Volumen der Ringvertiefung 22 des Funktionselements 10 entspricht.

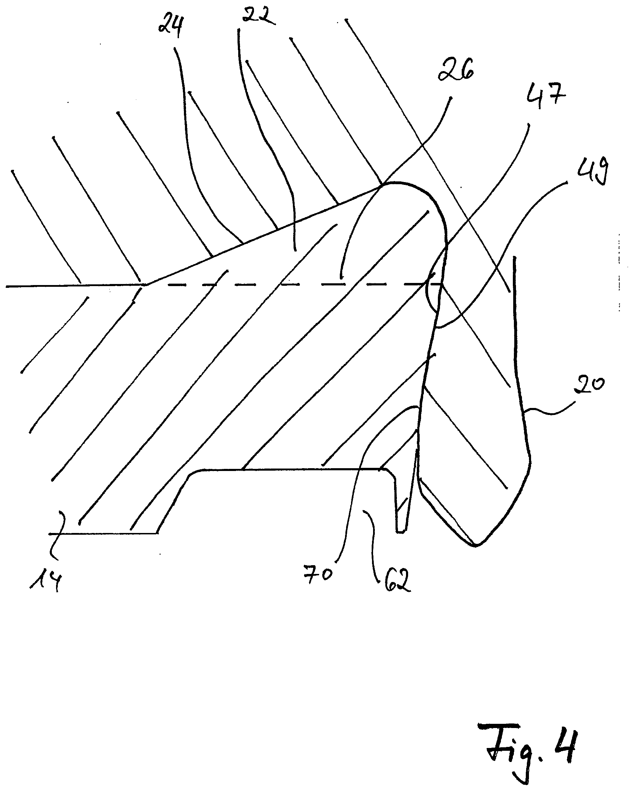

Wird nun das obere Werkzeug 40 entsprechend dem Doppelpfeil 44 nach unten bewegt, stanzt der Nietabschnitt 20 gemäß Fig. 2 einen Stanzbutzen 66 aus dem Blechteil 14, der dann durch die sich vorzugsweise nach unten aufweitende Bohrung 54 der Matrize 42 hindurch fällt und aus der Presse entsorgt werden kann. Die Durchstanzung des Blechteils 14 erfolgt aufgrund von Scherkräften, die zwischen dem freien Ende des Nietabschnitts 20 und dem Innenrand der Ringnase 80 an der Oberseite der Matrize 42 entstehen. Aufgrund der enormen Kraft beim Durchstanzen des Blechteils 14 wird nicht nur das Blechteil 14 verformt, sondern auch das freie Ende des Nietabschnitts 20 kann geringfügig in axialer Richtung gestaucht und folglich in radialer Richtung geringfügig auseinander gepresst werden, siehe Fig. 4, wodurch eine Art Hinterschneidung 47 an dem Nietabschnitt 20 erzeugt wird, die zwar relativ klein ist, jedoch sehr wirksam in dem Sinne, dass ein nicht unerheblicher Auspresswiderstand gewährleistet ist.

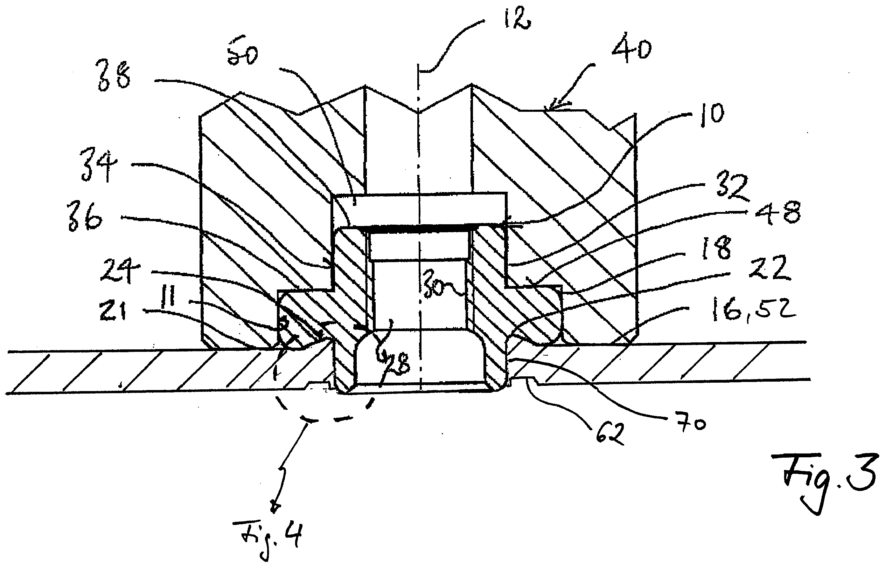

Während des Durchstanzens des Blechteils 14 drückt auch die Ringnase 80 über ihre kreisringförmige Stirnfläche 84 gegen die Unterseite des Blechteils 14 und bildet dort eine Vertiefung 62, die sich um den Nietabschnitt 20 im Bereich dessen freien Endes herum erstreckt. Aufgrund der enormen Kräfte, die hierbei als Reaktionskräfte über die kreisringförmige Stirnfläche 84 in das Material des Blechteils 14 eingeleitet werden, überschreitet das Material des Blechteils seine Fließgrenze und beginnt im Bereich um den Nietabschnitt 20 herum zu fließen, was zur Folge hat, dass das durch die Ausbildung der Vertiefung 62 verdrängte Material unter anderem in die Hinterschneidung 47 am Nietabschnitt 20 - so sie sich gebildet hat - gedrückt wird und dieselbe sogar noch vergrößert, wodurch das Blechteil 14 auspresssicher mit dem Element 10 verbunden ist, siehe Fig. 3. Gleichzeitig wird das durch die Ausbildung der Vertiefung 62 verdrängte Material in die Ringvertiefung 22 gedrückt, so dass es dieselbe gemäß den Figuren 3 bzw. 4 vollständig ausfüllt, was dadurch möglich wird, dass das Volumen Ringnase 80 im Wesentlichen dem Volumen der Ringvertiefung 22 entspricht oder etwas großer als dieses ist. Das in die Ringvertiefung 22 verdrängte Material liegt dabei eng an der schräggestellten Ringfläche 24 der Ringvertiefung 22 an und füllt die Ringvertiefung 22 vollständig aus, so dass die Verdrehsicherungsnasen 26 in das Blechmaterial eingedrungen sind und somit das Funktionselement 10 verdrehsicher an dem Blechteil 14 befestigt ist. Der Eingriff des Blechmaterials in die sich ausbildende Hinterschneidung 47 sorgt auch dafür, dass ein widerstandsfähiger Eingriff der Verdrehsicherungsnasen in dem Blechmaterial gewährleistet ist, was den Verdrehsicherungswiderstand erheblich erhöht. Ferner ist zu beachten, dass die Kräfte, die bei der Anbringung des Funktionselements auf das Blechteil herrschen, im Wesentlichen zwischen der ringförmigen Druckfläche 36 und der kreisringfömigen Stirnfläche 84 der Ringnase, die einander gegenüberliegen, wirken und daher keine Verformung des Gewindezylinders bewirken. Darüber hinaus ist zu erwähnen, dass die abgeflachte Form der Ringnase 80 der Matrize, deren radiale Ausdehnung in etwa so groß ist wie die radiale Ausdehnung der Ringvertiefung 22, einen weiteren besonderen Vorteil hat. Mit dieser Formgebung ist es möglich, mit einer relativ kleinen Höhe der Ringnase oberhalb der planaren umliegenden Fläche der Matrize ein relativ großes Volumen an Blechmaterial zu bewegen, und zwar derart, dass die Ringvertiefung 22 vollständig ausgefüllt werden kann. Hierfür reicht eine Höhe der Ringnase oberhalb der umliegenden Stirnfläche der Matrize von etwa 0,8mm oder weniger, bevorzugter Weise von 0,5mm. Im Übrigen sorgt die Ringnase 80 dafür, dass der Butzen 66 sauber vom restlichen Blechmaterial getrennt wird, ohne dass der Nietabschnitt 20 aus der unteren Ebene des Blechteils 14 herausragen muss, sondern um etwa 0,2 mm zurück bleibt.

Aufgrund der Tatsache, dass die Lochmatrize 42 über ihre ebene kreisringförmige Stirnfläche 84 an dem Blechmaterial 14 anliegt, kann das Blechmaterial, das das durch das Herausstanzen des Stanzbutzens 66 erzeugte Stanzloch 70 umgibt, nicht seitlich bzw. radial verdrängt werden. Vielmehr lässt sich über die ebene Stirnfläche 84 der Ringnase 80 der Lochmatrize 42, die bei dem erfindungsgemäßen Verfahren verwendet wird, eine Druckspannung in dem Blechmaterial, das das durch das Herausstanzen des Stanzbutzens 66 erzeugte Stanzloch 70 umgibt, aufbauen, bis das Material die Fließgrenze überschreitet und plastisch zu fließen beginnt, so dass es bei anhaltendem Druck nicht nur in die Ringvertiefung 22 eindringt, sondern benachbart zu dieser im Nietabschnitt 20 des Nietelements 10 eine Einschnürung 49 erzeugt, die durch das Blechmaterial dann belegt wird. Durch diese Einschnürung 49 wird die durch die Stauchung des Nietabschnitts 20 erzeugte Hinterschneidung 47 - so sie sich ausgebildet hat - in demselben vergrößert, wodurch das Nietelement 10 besonders zuverlässig gegen Auspressen an dem Blechteil 14 gesichert ist. Insbesondere werden durch das Material, das sich in der Einschnürung 49 befindet, nicht nur hohe Lochleibungsspannungen zwischen dem Blechteil 14 und dem Nietelement 10 erzeugt, die auch zur Verdrehsicherheit beitragen; vielmehr wird auch ein Formschluss derart erzeugt, dass das Auspressen des Nietelements 10 aus dem Blechteil 14 in Auspressrichtung nicht möglich ist oder nur bei Aufbringung von erheblichen zerstörerischen Kräften.

Angemerkt sei an dieser Stelle, dass das erfindungsgemäße Verfahren unter Verwendung eines Nietelements arbeitet, das im Rahmen der Anwendung des Verfahrens jedoch nicht oder nur geringfügig verformt wird. Das Nietelement, vorzugsweise ein RND Nietelement, wird also als Einpresselement verwendet, da primär nur das Blechteil verformt wird.

## Patentansprüche

1. Verfahren zum Anbringen eines Funktionselements (10) an einem Blechteil (14), das vorzugsweise eine Dicke von mehr als 3 mm aufweist, wobei das Funktionselement (10) einen Kopfteil (18) mit einer ringförmigen Auflagefläche (16) und einen rohrförmigen, selbststanzend ausgebildeten Nietabschnitt (20) aufweist, der sich auf der Seite der Auflagefläche (16) des Kopfteils (18) von dem Kopfteil (18) weg erstreckt, wobei die Auflagefläche (16) im Bereich des Übergangs von dem Kopfteil (18) in den Nietabschnitt (20) eine Ringvertiefung (22) mit einer zu einer Längsachse (12) des Funktionselements schräggestellten Ringfläche (24) umfasst, wobei die Ringvertiefung (22) ihre größte Tiefe benachbart zu dem Nietabschnitt (20) aufweist, und wobei gegebenenfalls Verdrehsicherungsmerkmale (26), beispielsweise Verdrehsicherungsnasen, vorgesehen sind, die sich im Bereich der Ringvertiefung (22) und/oder im Bereich des Übergangs der Ringvertiefung in den Nietabschnitt (20) befinden und die wahlweise die Ringvertiefung in einzelne um die Längsachse des Funktionselements (10) verteilte Felder unterteilen, wobei das Blechteil (14) auf einer Lochmatrize (42) abgestützt wird, die eine Bohrung (54) aufweist, deren Durchmesser zumindest im Wesentlichen dem Außendurchmesser des Nietabschnitts (20) entspricht oder etwas größer als dieser ist, wobei die Bohrung (54) an der dem Blechteil zugewandten Seite der Lochmatrize (42) von einer Ringnase umgeben ist, die gegenüber einer Auflagefläche der Lochmatrize (42) erhaben ist und eine ebene kreisringförmige Stirnfläche (84) definiert, wobei das Funktionselement (10) derart auf das auf der Lochmatrize (42) abgestützte Blechteil (14) gepresst wird, dass mittels des Nietabschnitts (20) ein Stanzbutzen (66) aus dem Blechteil (14) herausgestanzt wird und ein Anteil des Blechmaterials, das das durch das Herausstanzen des Stanzbutzens (66) erzeugte Stanzloch (70) umgibt, mittels der kreisringförmigen Stirnfläche (84) der Ringnase (80) in die Ringvertiefung (22) dieselbe vollständig ausfüllend plastisch eingedrückt wird;
**dadurch gekennzeichnet , dass**
der Nietabschnitt (20) im Ausgangszustand eine zylindrische äußere Mantelfläche aufweist und/oder frei von etwaigen Hinterschneidungen oder anderen Vertiefungen ist;
wobei der Anteil des Blechmaterials, das das durch das Herausstanzen des Stanzbutzens (66) erzeugte Stanzloch (70) umgibt, mittels der kreisringförmigen Stirnfläche (84) der Ringnase (80) im Bereich des Übergangs von dem Kopfteil (18) in den Nietabschnitt (20) auch radial in den Nietabschnitt (20) gepresst wird, und zwar in eine Hinterschneidung (47), die beim Anbringen des Funktionselements (10) an dem Blechteil (14) in dem Nietabschnitt (20) erzeugt wird.

2. Verfahren nach Anspruch 1,
**dadurch gekennzeichnet , dass** das Funktionselement (10) derart auf das auf der Lochmatrize (42) abgestützte Blechteil (14) gepresst wird, dass ein Anteil des Blechmaterials, das das durch das Herausstanzen des Stanzbutzens (66) erzeugte Stanzloch (70) umgibt, infolge Kontakts mit der kreisringförmige Stirnfläche (84) der Ringnase plastische zu fließen beginnt und in die Ringvertiefung (22) dieselbe vollständig ausfüllend plastisch eingedrückt wird.

3. Verfahren nach Anspruch 1 oder 2,
**dadurch gekennzeichnet, dass** das Funktionselement (10) derart auf das auf der Lochmatrize (42) abgestützte Blechteil (14) gepresst wird, dass ein Anteil des Blechmaterials, das das durch das Herausstanzen des Stanzbutzens (66) erzeugte Stanzloch (70) umgibt, im Bereich des Übergangs von dem Kopfteil (18) in den Nietabschnitt (20) radial in den Nietabschnitt (20) gepresst wird.

4. Verfahren nach zumindest einem der vorstehenden Ansprüche,
**dadurch gekennzeichnet, dass** die Hinterschneidung (47) an dem Nietabschnitt (20) durch Stauchung des freien Endes des Nietabschnitt (20) in axialer Richtung und/oder durch den Anteil des Blechmaterials erzeugt wird, der im Bereich des Übergangs von dem Kopfteil (18) in den Nietabschnitt (20) radial in den Nietabschnitt (20) gepresst wird.

5. Verfahren nach zumindest einem der vorstehenden Ansprüche,
**dadurch gekennzeichnet, dass** dass die Hinterschneidung (47) im Bereich des Übergangs von dem Kopfteil (18) in den Nietabschnitt (20) erzeugt wird.

6. Verfahren nach zumindest einem der vorstehenden Ansprüche,
**dadurch gekennzeichnet, dass** die Ringnase (80) während des Durchstanzens des Blechteils (14) über ihre kreisringförmige Stirnfläche (84) gegen die Unterseite des Blechteils (14) drückt und dort eine Vertiefung (62) bildet, die sich um den Nietabschnitt (20) im Bereich dessen freien Endes herum erstreckt, wobei das durch die Ausbildung der Vertiefung (62) verdrängte Material des Blechteils (14) unter anderem radial in den Nietabschnitt (20) gepresst wird, wodurch an der äußeren Mantelfläche des Nietabschnitt (20) eine Hinterschneidung (47) erzeugt wird.

7. Verfahren nach Anspruch 6,
**dadurch gekennzeichnet, dass** das durch die Ausbildung der Vertiefung (62) verdrängte Material des Blechteils (14) die durch Stauchung des freien Endes des Nietabschnitts (20) erzeugte Hinterschneidung (47) während der Anbringen des Funktionselements (10) an dem Blechteil (14) vergrößert.

8. Verfahren nach zumindest einem der vorstehenden Ansprüche,
**dadurch gekennzeichnet, dass** im Rahmen der Anbringen des Funktionselements (10) an dem Blechteil (14) mehr Material des Blechteils (14) als Material des Nietabschnitts (20) verformt wird.

9. Verfahren nach zumindest einem der vorstehenden Ansprüche,
**dadurch gekennzeichnet, dass** als Lochmatrize (42) eine Lochmatrize verwendet wird, deren kreisringförmige Stirnfläche (84) der Ringnase (80) eine radiale Erstreckung aufweist, die etwa der Hälfte der Dicke des Blechteils (14) entspricht und/oder die kleiner als die radiale Erstreckung der Ringvertiefung (22), jedoch größer als die Hälfte der radialen Erstreckung der Ringvertiefung (22) ist.

10. Verfahren nach zumindest einem der vorstehenden Ansprüche,
**dadurch gekennzeichnet, dass** als Lochmatrize (42) eine Lochmatrize verwendet wird, deren Ringnase (80) eine Volumen aufweist, das im Wesentlichen dem Volumen der Ringvertiefung (22) des Funktionselements (10) entspricht.

## Claims

1. A method of attaching a functional element (10) to a sheet metal part (14) that preferably has a thickness of more than 3 mm, wherein the functional element (10) has a head part (18) having a ring-shaped support surface (16) and a tubular rivet section (20) that is formed as self-piercing and that extends at the side of the support surface (16) of the head part (18) and away from the head part (18), wherein the support surface (16) comprises a ring recess (22) having a ring surface (24) inclined with respect to a longitudinal axis (12) of the functional element in the region of the transition from the head part (18) into the rivet section (20), wherein the ring recess (22) has its greatest depth adjacent to the rivet section (20), and wherein features providing security against rotation (26), for example, noses providing security against rotation, are optionally provided that are located in the region of the ring recess (22) and/or in the region of the transition of the ring recess into the rivet section (20) and that selectively divide the ring recess into individual fields distributed about the longitudinal axis of the functional element (10), wherein the sheet metal part (14) is supported on a piercing die (42) that has a bore (54) whose diameter at least substantially corresponds to the outer diameter of the rivet section (20) or is somewhat larger than it, wherein the bore (54) is surrounded at the side of the piercing die (42) facing the sheet metal part by a ring nose that is raised with respect to a support surface of the piercing die (42) and defines a planar circular ring-shaped end surface (84), wherein the functional element (10) is pressed onto the sheet metal part (14) supported on the piercing die (42) such that a panel slug (66) is punched out of the sheet metal part (14) by means of the rivet section (20) and a portion of the sheet metal material that surrounds the punched hole (70) generated by the punching out of the panel slug (66) is plastically pressed by means of the circular ring-shaped end surface (84) of the ring nose (80) into the ring recess (22) while completely filling it,
**characterized in that**,
in the starting state, the rivet section (20) has a cylindrical outer jacket surface and/or is free of any undercuts or other recesses,
with the portion of the sheet metal material that surrounds the punched hole (70) produced by the punching out of the panel slug (66) also being pressed radially into the rivet section (20) in the region of the transition from the head part (18) into the rivet section (20) by means of the circular ring-shaped end surface (84), and indeed being pressed into an undercut (47) produced in the rivet section (20) on the attachment of the functional element (10) to the sheet metal part (14).

2. A method in accordance with claim 1,
**characterized in that**
the functional element (10) is pressed onto the sheet metal part (14) supported on the piercing die (42) such that a portion of the sheet metal material that surrounds the punched hole (70) produced by the punching out of the panel slug (66) starts to flow plastically as a result of contact with the circular ring-shaped end surface (84) of the ring nose and is plastically pressed into the ring recess (22) while completely filling it.

3. A method in accordance with claim 1 or claim 2,
**characterized in that**
the functional element (10) is pressed onto the sheet metal part (14) supported on the piercing die (42) such that a portion of the sheet metal material that surrounds the punched hole (70) produced by the punching out of the panel slug (66) is pressed radially into the rivet section (20) in the region of the transition from the head part (18) into the rivet section (20).

4. A method in accordance with at least one of the preceding claims, **characterized in that**
the undercut (47) at the rivet section (20) is produced by the compression of the free end of the rivet section (20) in the axial direction and/or by the portion of the sheet metal material that is pressed radially into the rivet section (20) in the region of the transition from the head part (18) into the rivet section (20).

5. A method in accordance with at least one of the preceding claims, **characterized in that**
the undercut (47) is produced in the region of the transition from the head part (18) into the rivet section (20).

6. A method in accordance with at least one of the preceding claims, **characterized in that**,
during the punching of the sheet metal part (14), the ring nose (80) presses via its circular ring-shaped end surface (84) toward the lower side of the sheet metal part (14) and there forms a recess (62) that extends around the rivet section (20) in the region of its free end, with the material of the sheet metal part (14) displaced by the formation of the recess (62) inter alia being pressed radially into the rivet section (20), whereby an undercut (47) is produced at the outer jacket surface of the rivet section (20).

7. A method in accordance with claim 6,
**characterized in that**
the material of the sheet metal part (14) displaced by the formation of the recess (62) enlarges the undercut (47) produced by the compression of the free end of the rivet section (20) during the attachment of the functional element (10) to the sheet metal part (14).

8. A method in accordance with at least one of the preceding claims, **characterized in that**
a larger portion of the sheet metal part (14) is deformed than material of the rivet section (20) on attachment of the functional element (10) to the sheet metal part (14).

9. A method in accordance with at least one of the preceding claims, **characterized in that**
a piercing die is used as the piercing die (42) whose circular ring-shaped end surface (84) of the ring nose (80) has a radial extent that corresponds to approximately half the thickness of the sheet metal part (14) and/or that is smaller than the radial extent of the ring recess (22), but larger than half the radial extent of the ring recess (22).

10. A method in accordance with at least one of the preceding claims, **characterized in that**
a piercing die is used as the piercing die (42) whose ring nose (80) has a volume that substantially corresponds to the volume of the ring recess (22) of the functional element (10).

## Revendications

1. Procédé pour monter un élément fonctionnel (10) sur une pièce en tôle (14) qui présente de préférence une épaisseur de plus de 3 mm,
dans lequel
l'élément fonctionnel (10) comprend une partie de tête (18), pourvue d'une surface d'appui annulaire (16), et une portion formant rivet (20) tubulaire réalisée de façon auto-poinçonneuse et s'étendant du côté de la surface d'appui (16) de la partie de tête (18), en éloignement de la partie de tête (18),
la surface d'appui (16) présente, au niveau de la transition de la partie de tête (18) vers la portion formant rivet (20), une cavité annulaire (22) pourvue d'une surface annulaire (24) inclinée par rapport à un axe longitudinal (12) de l'élément fonctionnel,
la cavité annulaire (22) présente sa plus grande profondeur au voisinage de la portion formant rivet (20), et
le cas échéant il est prévu des indices de blocage anti-rotation (26), par exemple des ergots de blocage anti-rotation, qui se trouvent au niveau de la cavité annulaire (22) et/ou au niveau de la transition de la cavité annulaire vers la portion formant rivet (20) et qui subdivisent au choix la cavité annulaire en champs individuels répartis autour de l'axe longitudinal de l'élément fonctionnel (10),
la pièce en tôle (14) est supportée sur une matrice perforée (42) qui présente un perçage (54) dont le diamètre correspond au moins sensiblement au diamètre extérieur de la portion formant rivet (20) ou est légèrement plus grand que celui-ci,
sur la face de la matrice perforée (42) tournée vers la pièce en tôle, le perçage (54) est entouré par un ergot annulaire qui est surélevé par rapport à une surface d'appui de la matrice perforée (42) et qui définit une surface frontale (84) annulaire circulaire,
l'élément fonctionnel (10) est pressé sur la pièce en tôle (14) supportée sur la matrice perforée (42), de telle sorte qu'une pastille de poinçonnage (66) est poinçonnée hors de la pièce en tôle (14) au moyen de la portion formant rivet (20), et une partie du matériau de tôle entourant le trou poinçonné (70) généré par le poinçonnage de la pastille de poinçonnage (66) est enfoncée plastiquement jusque dans la cavité annulaire (22) au moyen de la surface frontale (84) annulaire circulaire de l'ergot annulaire (80) en la remplissant entièrement,
**caractérisé en ce que**
dans l'état de départ, la portion formant rivet (20) présente une surface enveloppe cylindrique extérieure et/ou est dépourvue de contre-dépouilles éventuelles ou d'autres cavités ;
la partie du matériau de tôle qui entoure le trou poinçonné (70) généré par le poinçonnage de la pastille de poinçonnage (66) est également pressée radialement jusque dans la portion formant rivet (20) au moyen de la surface frontale (84) annulaire circulaire de l'ergot annulaire (80) au niveau de la transition de la partie de tête (18) vers la portion formant rivet (20), à savoir jusque dans une contre-dépouille (47) qui est générée lors du montage de l'élément fonctionnel (10) sur la pièce en tôle (14) dans la portion formant rivet (20).

2. Procédé selon la revendication 1,
**caractérisé en ce que**
l'élément fonctionnel (10) est pressé sur la pièce en tôle (14) supportée sur la matrice perforée (42) de telle sorte qu'une partie du matériau de tôle entourant le trou poinçonné (70) généré par le poinçonnage de la pastille de poinçonnage (66) commence à fluer plastiquement en raison du contact avec la surface frontale (84) annulaire circulaire de l'ergot annulaire et est enfoncée plastiquement jusque dans la cavité annulaire (22) en la remplissant entièrement.

3. Procédé selon la revendication 1 ou 2,
**caractérisé en ce que**
l'élément fonctionnel (10) est pressé sur la pièce en tôle (14) supportée sur la matrice perforée (42) de telle sorte qu'une partie du matériau de tôle entourant le trou poinçonné (70) généré par le poinçonnage de la pastille de poinçonnage (66) est pressée radialement jusque dans la portion formant rivet (20) au niveau de la transition de la partie de tête (18) vers la portion formant rivet (20).

4. Procédé selon l'une au moins des revendications précédentes, **caractérisé en ce que**
la contre-dépouille (47) sur la portion formant rivet (20) est générée par refoulement de l'extrémité libre de la portion formant rivet (20) en direction axiale et/ou par la partie du matériau de tôle qui est pressée radialement jusque dans la portion formant rivet (20) au niveau de la transition de la partie de tête (18) vers la portion formant rivet (20).

5. Procédé selon l'une au moins des revendications précédentes, **caractérisé en ce que**
la contre-dépouille (47) est générée au niveau de la transition de la partie de tête (18) vers la portion formant rivet (20).

6. Procédé selon l'une au moins des revendications précédentes, **caractérisé en ce que**
pendant le poinçonnage de la pièce en tôle (14), l'ergot annulaire (80) s'applique par sa surface frontale (84) annulaire circulaire contre la face inférieure de la pièce en tôle (14) et y forme une cavité (62) qui s'étend autour de la portion formant rivet (20) au niveau de son extrémité libre, le matériau de la pièce en tôle (14) refoulé par la réalisation de la cavité (62) étant pressé entre autres radialement jusque dans la portion formant rivet (20), moyennant quoi une contre-dépouille (47) est générée sur la surface enveloppe extérieure de la portion formant rivet (20).

7. Procédé selon la revendication 6,
**caractérisé en ce que**
le matériau de la pièce en tôle (14) refoulé par la réalisation de la cavité (62) agrandit la contre-dépouille (47) générée par le refoulement de l'extrémité libre de la portion formant rivet (20) pendant le montage de l'élément fonctionnel (10) sur la pièce en tôle (14).

8. Procédé selon l'une au moins des revendications précédentes, **caractérisé en ce que**
dans le cadre du montage de l'élément fonctionnel (10) sur la pièce en tôle (14), plus de matériau de la pièce en tôle (14) que du matériau de la portion formant rivet (20) est déformé.

9. Procédé selon l'une au moins des revendications précédentes, **caractérisé en ce que**
à titre de matrice perforée (42) une matrice perforée est utilisée dont la surface frontale (84) annulaire circulaire de l'ergot annulaire (80) présente une extension radiale qui correspond approximativement à la moitié de l'épaisseur de la pièce en tôle (14) et/ou qui est inférieure à l'extension radiale de la cavité annulaire (22), mais supérieure à la moitié de l'extension radiale de la cavité annulaire (22).

10. Procédé selon l'une au moins des revendications précédentes, **caractérisé en ce que**
à titre de matrice perforée (42) une matrice perforée est utilisée dont l'ergot annulaire (80) présente un volume qui correspond sensiblement au volume de la cavité annulaire (22) de l'élément fonctionnel (10).
